# EUROPÄISCHE PATENTSCHRIFT

(11) **EP 3 321 111 B1**
(45) Veröffentlichungstag und Bekanntmachung des Hinweises auf die Patenterteilung: **13.11.2019**
(21) Anmeldenummer: 17187613.9
(22) Anmeldetag: 24.08.2017
(51) Int. Cl.: B60C 23/04

(54) **VERFAHREN ZUR BESTIMMUNG EINES BATTERIEZUSTANDS**
METHOD FOR DETERMINING A BATTERY CONDITION
PROCÉDÉ DE DÉTERMINATION D'UN ÉTAT DE BATTERIE

(30) Priorität: 14.11.2016 DE 102016222304
(43) Veröffentlichungstag der Anmeldung: 16.05.2018
(73) Patentinhaber: Continental Reifen Deutschland GmbH, 30165 Hannover (DE)
(72) Erfinder: Cyllik, Adrian, 30159 Hannover (DE); Hanna, Jörg, 32289 Rödinghausen (DE)
(74) Vertreter: Finger, Karsten

(56) Entgegenhaltungen:
- WO-A1-2016/011695
- DE-A1- 4 303 591
- US-A- 5 774 048
- US-A1- 2003 048 178
- US-A1- 2008 284 577
- US-A1- 2015 057 873

## Beschreibung

Die vorliegende Erfindung bezieht sich auf ein Verfahren zur Bestimmung eines Batteriezustands einer Batterie eines Reifensensors sowie auf eine Vorrichtung zur Durchführung des Verfahrens zur Bestimmung eines Batteriezustands einer Batterie eines Reifensensors.

Die Erfindung geht aus von einem Verfahren zur Bestimmung eines Batteriezustands einer Batterie eines Reifensensors. Dabei ist der Reifensensor zur Bestimmung einer Zustandsgröße eines Luftreifens vorgesehen. Bei der Zustandsgröße des Luftreifens kann es sich insbesondere um einen Druck handeln. Dabei handelt es sich beispielsweise um einen Druck, der im Inneren des Luftreifens herrscht, dem sogenannten Reifeninnendruck. Gemäß dem Verfahren wird zunächst ein Reifensensor bereitgestellt, wobei der Reifensensor in einem Reifeninnenraum eines Luftreifens bereitgestellt wird. Der Reifensensor kann auch außerhalb des Luftreifens angeordnet sein.
Dabei weist der Reifensensor eine Batterie auf. Ferner werden durch eine Sendeeinheit des Reifensensors Datentelegramme in regelmäßigen Zeitintervallen ausgesendet.

Das erfindungsgemäße Verfahren und die Vorrichtung sind nicht nur in einem Luftreifen, sondern auch in einem Vollgummireifen anwendbar. In dem Fall der Anwendung in einem Vollgummireifen ist der Reifensensor innerhalb des Vollgummireifens oder außerhalb des Vollgummireifens an dem Vollgummireifen angeordnet. Darüber hinaus ist das Verfahren grundsätzlich bei jeder Sensorvorrichtung anwendbar, wobei die Sensorvorrichtung energieautark mittels einer Batterie betrieben wird und eine von der Energie der Batterie abhängige und zählbare Anzahl an Datentelegrammen über eine mittels der Sensorvorrichtung ermittelte Größe versendet.

Aus dem Stand der Technik sind Verfahren bekannt, wobei die Verfahren zur Bestimmung eines Batteriezustands einer Batterie vorgesehen sind.
So wird beispielsweise in der US 2007 019 48 96 A1 ein Verfahren zur Bestimmung des Zustandes einer Batterie offenbart, wobei mittels der Batterie ein Sensor betrieben wird und wobei ferner anhand einer Nutzung des Sensors auf den Gebrauch der Batterie geschlossen werden kann. US 2008/284577 A1 offenbart die Bestimmung des Energieverbauchs von Sensormodulen.

Aus dem Stand der Technik ist es ferner bekannt, anhand einer Laufleistung eines Luftreifens, in dem der Reifensensor verwendet wird, auf den Zustand der Batterie des Reifensensors zu schließen.
Gemäß dem Stand der Technik könnte es dazu kommen, dass lediglich anhand der Laufleistung des Luftreifens bestimmte Zustände der Batterie nicht zuverlässig oder genau genug bestimmt werden können. Hintergrund der möglicherweise weder zuverlässigen noch ausreichend genauen Bestimmung des Zustands der Batterie ist, dass Reifenstillstandszeiten, während derer die Batterie in dem Reifensensor verwendet wird, gegebenenfalls nicht berücksichtigt werden könnten.
Der Erfindung liegt daher die Aufgabe zugrunde, ein verbessertes Verfahren zur Bestimmung eines Batteriezustands einer Batterie eines Reifensensors bereitzustellen. Gelöst wird die gestellte Aufgabe erfindungsgemäß dadurch, dass eine Anzahl der von dem Reifensensor ausgesendeten Datentelegramme bestimmt wird und in Abhängigkeit der Anzahl der ausgesandten Datentelegramme der Batteriezustand der Batterie bestimmt wird.
Durch den erfindungsgemäßen Umstand, wonach eine Anzahl der von dem Reifensensor ausgesendeten Datentelegramme bestimmt wird und wobei in Abhängigkeit der Anzahl der ausgesendeten Datentelegramme der Batteriezustand der Batterie bestimmt wird, werden beispielsweise auch solche Batterienutzungszeiten berücksichtigt, in denen zwar keine Laufleistung des Luftreifens erbracht wird, in denen aber beispielsweise der Reifensensor betrieben wird und Datentelegramme sendet. Der Betrieb des Reifensensors während eines Reifenstillstands, das Versenden von Datentelegrammen während des Reifenstillstands und der damit verbundene Verbrauch der Batterie während des Reifenstillstands werden somit bei der Bestimmung des Zustands der Batterie insbesondere berücksichtigt. Durch die Bestimmung und Erfassung der Anzahl der versendeten Datentelegramme wird eine präzise und zuverlässige Bestimmung des Zustands der Batterie des Reifensensors ermöglicht.

Das Verfahren zur Bestimmung eines Batteriezustands einer Batterie eines Reifensensors wird somit zuverlässiger und genauer gestaltet.

Die Anzahl der erfassten Datentelegrammen kann beispielsweise in Einerschritten, in Fünferschritten, in Zehnerschritten, in Hunderterschritten oder in Tausenderschritten erfasst und/oder gespeichert und/oder übertragen werden.

Bei einem Datentelegramm handelt es sich um ein elektromagnetisches Signal, das vorzugsweise elektronisch erzeugt wurde und durch eine Sendeeinheit des Reifensensors, in dem die Batterie verwendet wird, ausgesendet wird. Das Datentelegramm kann vorzugsweise Informationen über den Luftreifen, beispielsweise ein Druck oder eine Temperatur, die im Inneren des Luftreifens herrschen, oder eine Profiltiefe oder eine Radlast und/oder über den Reifensensor selbst enthalten, wobei diese Informationen insbesondere mittels des Reifensensors gewonnen wurden.

Der Betrieb des Reifensensors entspricht insbesondere seinem sogenannten Betriebsmodus. Je nach Betriebsmodus können unterschiedliche Anzahlen von Datentelegrammen pro Zeiteinheit gesendet werden. Dabei hängt diese Anzahl der versendeten Datentelegramme insbesondere davon ab, in welchem Zustand oder Betriebszustand sich das Fahrzeug und/oder der Reifen befinden.

Die Erfindung betrifft zudem eine Vorrichtung zur Durchführung eines erfindungsgemäßen Verfahrens. Dabei weist die Vorrichtung einen Reifensensor und/oder eine zentrale Empfangsvorrichtung und/oder eine Sendeeinheit und/oder eine Auswertevorrichtung auf. Die Vorrichtung kann beispielsweise auch als System bezeichnet werden, insbesondere als System zur Bestimmung eines Batteriezustands.

Bei einer Sendeeinheit handelt es sich insbesondere um eine elektromagnetisch wirkende Sendeeinheit. Die Sendeeinheit ist zum aktiven Versenden der Datentelegramme, sowie der Information über die Anzahl der versendeten Datentelegramme vorgesehen.

Bei einer Auswertevorrichtung handelt es sich insbesondere um eine elektronisch wirkende Auswertevorrichtung.

Das erfindungsgemäße Verfahren und die erfindungsgemäße Vorrichtung können sowohl in einem PKW-, Nutzfahrzeug- oder LKW-Reifen, als auch in einem Fahrradreifen oder Motorradreifen verwendet werden.

Insbesondere wird eine zentrale Empfangsvorrichtung bereitgestellt.

Die zentrale Empfangsvorrichtung kann insbesondere außerhalb des Luftreifens angeordnet sein.

Ferner werden die Datentelegramme insbesondere durch die zentrale Empfangsvorrichtung empfangen.

Weitere vorteilhafte Ausgestaltungsformen der Erfindung sind Gegenstand der Unteransprüche.

Gemäß einer Ausgestaltungsform der Erfindung wird die Anzahl der ausgesendeten Datentelegramme mit einem Referenzwert verglichen.

Der Referenzwert wird insbesondere in einer Speichereinheit des Reifensensors hinterlegt. Der Referenzwert entspricht einer bestimmten, maximal möglichen Anzahl versendbarer Datentelegramme. Diese maximale Anzahl versendbarer Datentelegramme hängt von den physikalisch-chemischen Voraussetzungen der Batterie, sowie von der Art des Betriebs des Reifensensors ab.

Die Anzahl der versendeten Datentelegramme kann insbesondere auch in der Speichereinheit des Reifensensors hinterlegt werden. Dadurch kann die Information über die Anzahl der versendeten Datentelegramme jederzeit, beispielsweise nach einer externen Abfrage, aus der Speichereinheit des Reifensensors abgerufen oder ausgelesen werden.

Insbesondere kann ein Vergleich der Anzahl der versendeten Datentelegramme mit dem Referenzwert durch eine Analyseeinheit direkt in dem Reifensensor vorgenommen werden. Die Analyseeinheit ist dann Bestandteil des Reifensensors.
Das Ergebnis dieses Vergleichs kann ebenfalls in der Speichereinheit des Reifensensors hinterlegt und insbesondere auf Anfrage von diesem abgerufen werden.

Gemäß einer Ausgestaltungsform der Erfindung handelt es sich bei dem Batteriezustand um eine Restkapazität der Batterie oder um eine Restlaufzeit der Batterie.

Ferner wird gemäß einer weiteren Ausführungsform ein Quotient des Werts der Anzahl der Datentelegramme mit dem Referenzwert gebildet.
Dieser Quotient kann insbesondere in der Speichereinheit des Reifensensors hinterlegt werden. Eine Information über diesen Quotient kann ferner mittels eines Datentelegramms übermittelt werden.

Gemäß einer weiteren vorteilhaften Ausgestaltungsform der Erfindung wird eine Information über die Anzahl der von dem Reifensensor ausgesandten Datentelegramme an eine weitere Auswertevorrichtung übertragen und insbesondere von der Auswertevorrichtung verarbeitet wird. Diese Information wird vorzugsweise mittels je eines der Datentelegramme versendet.
Die weitere Auswertevorrichtung kann beispielsweise Bestandteil der zentralen Empfangsvorrichtung sein.
Ferner kann beispielsweise eine Information über die Anzahl der von dem Reifensensor ausgesandten Datentelegramme an eine andere Auswertevorrichtung übertragen werden. Diese andere Auswertvorrichtung ist insbesondere weder Bestandteil des Reifensensors noch der zentralen Empfangsvorrichtung.

Die Übertragung einer Information über die Anzahl der von dem Reifensensor ausgesandten Datentelegramme kann insgesamt periodisch oder aperiodisch versendet werden.

Gemäß einer nächsten vorzugsweisen Ausgestaltungsform der Erfindung wird ein Wert der Anzahl der Datentelegramme mit einem Schwellenwert verglichen. Dabei wird in Abhängigkeit dieses Vergleichs ein Warnsignal oder ein Statussignal erzeugt. Der Schwellenwert kann somit auch die Funktion eines Sicherheitsfaktors übernehmen, falls der genaue Referenzwert beispielsweise nicht zuverlässig bekannt ist oder nicht ausreichend genau bestimmt werden kann. Der Schwellenwert kann beispielsweise bei 80% bis 90% des erwarteten Referenzwertes liegen.

Vorzugsweise hängt die Wahl des Schwellenwertes von der Art des Reifensensors und von der verwendeten Batterie ab. Dabei hängt der Schwellenwert insbesondere von den physikalisch-chemischen Bedingungen der Batterie sowie von der Art des Einsatzes des Reifensensors und der mit diesen Bedingungen verbundenen möglichen Einsatzdauer der Batterie ab. Der Einsatz des Reifensensors betrifft insbesondere den Umstand, ob der Reifensensor und die Batterie beispielsweise durch die Laufleistung des Reifens physisch beeinträchtigt worden ist.

Bei dem Schwellenwert kann es sich beispielsweise um eine kritische Anzahl versendbarer Datentelegramme handeln. Nach Erreichen der kritischen Anzahl versendbarer Datentelegramme, kann beispielsweise eine Restkapazität der Batterie von 10% oder 20% gegeben sein.

Durch den erfindungsgemäßen Umstand, wonach ein Wert der Anzahl der Datentelegramme mit einem Schwellenwert verglichen wird und dabei in Abhängigkeit des Vergleichs ein Warnsignal oder eine Statussignal erzeugt wird, wird ein Verfahren bereitgestellt, dass präzise an die Anforderungen und physikalisch-chemischen Gegebenheiten der Batterie angepasst werden kann. Eine Bestimmung des Zustands der Batterie wird somit präziser und zuverlässiger durchgeführt, als es gemäß dem Stand der Technik der Fall sein kann.

Gemäß einer weiteren vorzugsweisen Ausgestaltungsform der Erfindung wird ein Quotient des Wertes der Anzahl der versendeten Datentelegramme mit dem Schwellenwert gebildet. Dabei wird insbesondere das Warnsignal oder das Statussignal in Abhängigkeit dieses Quotienten erzeugt.
Dieser Quotient kann insbesondere in der Speichereinheit des Reifensensors hinterlegt werden. Eine Information über diesen Quotient kann ferner mittels eines Datentelegramms übermittelt werden.

Der erfindungsgemäße Umstand, wonach ein Quotient des Wertes der Anzahl der Datentelegramme mit dem Schwellenwert oder mit dem Referenzwert gebildet wird, bietet den Vorteil, wonach eine Information über den Quotienten weniger Platz oder Raum innerhalb des Datentelegramms und innerhalb der Speichereinheit des Reifensensors beansprucht, als beispielsweise der Wert des Betrags der Anzahl gesendeter Datentelegramme.

Der Quotient des Wertes der Anzahl der Datentelegramme mit dem Schwellenwert oder mit dem Referenzwert kann beispielsweise einen Wert von 0 bis 100 % haben. Der Quotient kann beispielsweise in 1%-Schritten, in 5%-Schritten oder in 10%-Schritten gespeichert und/oder verarbeitet und/oder versendet werden.
Das Warnsignal oder das Statussignal können Informationen über die genaue Anzahl versendeter Datentelegramme und/oder über das Ergebnis des Vergleichs der Anzahl versendete Datentelegramme mit dem Referenzwert und/oder mit dem Schwellenwert und/oder über den Umstand, dass der Referenzwert und/oder der Schwellenwert erreicht und/oder überschritten worden ist, enthalten.

Gemäß der Erfindung wird der Batteriezustand in Abhängigkeit einer Temperatur der Batterie bestimmt. Durch den erfindungsgemäßen Umstand, wonach der Batteriezustand in Abhängigkeit einer Temperatur der Batterie bestimmt wird, kann der Batteriezustand genau und zuverlässig bestimmt werden. Hintergrund der genauen und zuverlässigen Bestimmung des Batteriezustands, und insbesondere der Restkapazität der Batterie, ist, dass der Zustand der Batterie durch die Temperatur, die im Inneren oder im Äußeren der Batterie herrscht, maßgeblich mitbestimmt wird. So kann eine erhöhte Temperatur der Batterie zu einer beschleunigten Alterung der Batterie und somit zu einer Verkürzung der Einsatzdauer der Batterie führen. Eine erhöhte Temperatur liegt beispielsweise bei 70° C.
Für den Fall einer erhöhten Temperatur kann beispielsweise ein neuer Referenzwert vorgegeben werden. Der neue Referenzwert ist kleiner als der ursprüngliche Referenzwert und trägt dem Umstand Rechnung, dass sich aufgrund der erhöhten Temperatur die Anzahl der möglichen versendbaren Datentelegramme verkleinert hat. Der ursprüngliche Referenzwert entspricht der Anzahl der möglichen versendbaren Datentelegramme ohne, dass die Batterie einer erhöhten Temperatur ausgesetzt worden ist. Für den Fall, dass nach Erreichen einer erhöhten Temperatur der Referenzwert geändert worden ist und die Temperatur weiter steigt, wird vorzugsweise der Referenzwert erneut geändert und an die, aufgrund der weiter erhöhten Temperatur veränderte, maximale Anzahl versendbarer Datentelegramme angepasst. Die Änderung des Referenzwertes wird insbesondere in Abhängigkeit der Temperatur, einer Änderung der Temperatur und/oder einer zeitlichen Dauer, während der der Reifensensor einer Temperatur ausgesetzt ist, vollzogen. Insbesondere wird der Referenzwert ab einer Temperatur größer als 70°C ständig in Abhängigkeit von der Temperatur T und der Zeit, in der die Temperatur anliegt, angepasst.

Alternativ kann im Fall einer erhöhten Temperatur für jedes während dieses Falls versendeten Datentelegramms ein doppelt oder dreifach so hoher Wert, während der Zeit der erhöhten Temperatur versendeten Datentelegramme, gezählt und erfasst werden. Der Faktor, mit dem ein Zählwert jedes Datentelegramms während der Zeit der erhöhten Temperatur multipliziert wird, kann insbesondere temperaturabhängig sein und zu höheren Temperaturen hin ansteigen. Für den Fall einer Temperatur beispielsweise kleiner 70°C wird jedem Datentelegramm der Zählwert 1 zugeordnet.

Ferner kann auch eine Temperatur unter 0° C zu einer Beeinflussung der Batterie führen. Beispielsweise kann bei einer solchen Temperatur unter 0° C eine Spannung der Batterie derart sinken, dass keine Datentelegramme mehr versendet werden. Daher kann beispielsweise in Abhängigkeit des Umstands, dass sich eine Temperatur außerhalb oder innerhalb des Reifensensors einem Wert von unter 0° C nähert oder diese Temperatur erreicht oder unterschreitet ein weiterer neuer Referenzwert gebildet werden. Dieser weitere neu gebildete Referenzwert ist kleiner als der ursprüngliche Referenzwert und trägt dem Umstand Rechnung, dass sich aufgrund der Temperatur unter 0°C die Anzahl der möglichen versendbaren Datentelegramme verkleinert hat. Der ursprüngliche Referenzwert entspricht wiederum der Anzahl der möglichen versendbaren Datentelegramme ohne, dass die Batterie einer Temperatur unter 0°C ausgesetzt worden ist. Für den Fall, dass die Temperatur wieder auf Werte größer als 0° C steigt, steigt die Anzahl möglich zu versendender Datentelegramme wieder an. Der Referenzwert wird dann wieder auf den ursprünglichen Referenzwert geändert.

Gemäß einer weiteren vorzugsweisen Ausgestaltungsform der Erfindung wird der Batteriezustand in Abhängigkeit einer Laufleistung des Luftreifens bestimmt.

Eine hohe Laufleistung des Luftreifens kann wiederum zu einer Verkürzung der Einsatzdauer der Batterie oder des Reifensensors insgesamt führen.

Gemäß einer weiteren vorzugsweisen Ausgestaltungsform der Erfindung wird der Batteriezustand in Abhängigkeit eines Betriebsmodus der Batterie und/oder des Reifensensors bestimmt.

Durch den erfindungsgemäßen Umstand, wonach der Batteriezustand in Abhängigkeit eines Betriebsmodus der Batterie und/oder des Reifensensors bestimmt wird, wird das Verfahren zur Bestimmung des Batteriezustands der Batterie des Reifensensors zuverlässig gestaltet.

Gemäß einer weiteren vorzugsweisen Ausgestaltungsform der Erfindung wird für jeden Betriebsmodus der Batterie und/oder des Reifensensors eine separate, dem Betriebsmodus zugeordnete Anzahl der von dem Reifensensor ausgesendeten Datentelegramme bestimmt.

Hintergrund ist, dass je nach Batteriebetriebsmodus oder je nach Betriebsmodus des Reifensensors unterschiedliche Anzahlen von Datentelegrammen pro Zeiteinheit ausgesendet werden können. Dadurch kommt es insbesondere je nach Betriebsmodus des Reifensensors zu unterschiedlichen Zeitdauern zwischen der Aussendung von zwei unmittelbar aufeinander folgend ausgesendeten Datentelegrammen.
Zur Bestimmung des genauen Zustands der Batterie kann eine Korrektur in Abhängigkeit des Betriebsmodus vorgenommen werden. Diese Korrektur berücksichtigt beispielsweise den Umstand, dass der Reifensensor und die Batterie je nach Betriebsmodus des Reifensensors unterschiedlich beansprucht werden.

Insbesondere kann dabei berücksichtigt werden, ob es sich um einen Betriebsmodus des Reifensensors handelt, der in einem Stillstand des Luftreifens oder während einer Fahrt des Luftreifens vorliegt.

Anhand des Umstands, dass eine Anzahl von versendeten Datentelegrammen unterschiedlichen Betriebsmodi zugeordnet ist, kann ferner ein Rückschluss auf ein Fahrprofil ermöglicht werden. Das Fahrprofil betrifft das Fahrzeug, in dem der Reifen verwendet wird, und enthält Informationen, in welchem Betriebsmodus der Reifensensor und somit der Reifen verwendet wurden. Des Weiteren können Rückschlüsse gezogen werden, wie lange die Stillstandzeit und wie lange die Fahrtzeit des Reifens oder des Fahrzeugs ist.

Gemäß einer nächsten vorteilhaften Ausführungsform der Erfindung wird eine Information über die Anzahl der ausgesandten Datentelegramme in mindestens eine Speichereinheit des Reifensensors und/oder in mindestens einer anderen Speichereinheit der zentralen Empfangsvorrichtung gespeichert. Dabei handelt es sich bei der Information insbesondere um einen Quotienten aus dem Wert der Anzahl der Datentelegramme und dem Referenzwert.

Gemäß einer weiteren vorzugsweisen Ausgestaltungsform der Erfindung wird die Information über die Anzahl der ausgesandten Datentelegramme lediglich nach einer Abfrage von der mindestens einen Speichereinheit des Reifensensors und/oder von der mindestens einen anderen Speichereinheit der zentralen Empfangsvorrichtung zu einer Auswertevorrichtung gesendet. Das Versenden dieser Information über die Anzahl erfolgt mittels der Sendeeinheit des Reifensensors beziehungsweise mittels einer weiteren Sendeeinheit der zentralen Empfangsvorrichtung. Bei der weiteren Sendeeinheit der zentralen Empfangsvorrichtung kann es sich beispielsweise um einen CAN-Transceiver handeln.

Durch den erfindungsgemäßen Umstand, wonach die Information über die Anzahl der ausgesandten Datentelegramme lediglich nach einer Abfrage von der mindestens einen Speichereinheit des Reifensensors und/oder von der mindestens einen anderen Speichereinheit der zentralen Empfangsvorrichtung ausgesendet und insbesondere nicht mit jedem Datentelegramm gesendet wird, kann Platz in einer Vielzahl von Datentelegrammen gespart werden.

Gemäß einer weiteren vorteilhaften Ausführungsform der Erfindung wird eine Anzahl aller gesendeten Datentelegramme bestimmt und insbesondere gespeichert und/oder eine Anzahl der Datentelegramme wird bestimmt und insbesondere gespeichert, die während Fahrtzeiten des Luftreifens gesendet werden, und eine separate Anzahl von Datentelegrammen wird bestimmt und insbesondere gespeichert, die während Reifenstillstandszeiten des Luftreifens gesendet werden, und/oder eine Anzahl der Datentelegramme wird je nach einem Betriebsmodus des Reifensensors bestimmt und insbesondere gespeichert.
Für den Fall, dass eine Anzahl der Datentelegramme je nach einem Betriebsmodus des Reifensensors bestimmt wird, werden die Anzahlen der einzelnen Betriebsmodi zusammengerechnet um eine Gesamtzahl der versendeten Datentelegramme zu bestimmen. Diese Gesamtzahl kann mit dem Referenzwert verglichen werden. Die Anzahlen je Betriebsmodus lassen ferner einen Rückschluss darauf zu, wie lange sich der Reifensensor und damit der Reifen selbst in einem bestimmten Betriebsmodus befunden haben.

Die Gesamtzahl der Datentelegramme und/oder die Anzahl der Datentelegramme, die jeweils bei sich bewegenden Reifen oder stillstehenden Reifen ausgesendet werden, lassen sich auch durch Addition der entsprechenden Anzahlen der einzelnen Betriebsmodi bestimmen.

Für den Fall, dass eine Anzahl der Datentelegramme bestimmt wird, die während Fahrtzeiten des Luftreifens gesendet werden, und eine separate Anzahl von Datentelegrammen bestimmt wird, die während Reifenstillstandszeiten des Luftreifens gesendet werden, werden die Anzahlen der Fahrtzeiten und der Reifenstillstandszeiten zusammengerechnet um die Gesamtzahl der versendeten Datentelegramme zu bestimmen. Diese Gesamtzahl kann mit dem Referenzwert verglichen werden. Die Anzahlen je Fahrtzeiten und Reifenstillstandszeiten lassen ferner einen Rückschluss darauf zu, wie lange sich der Reifensensor und damit der Reifen selbst in einem Fahrtzustand beziehungsweise in einem Reifenstillstandzustand befunden haben.

Gemäß einer weiteren vorteilhaften Ausgestaltungsform der Erfindung weist der Reifensensor mindestens eine Speichereinheit und/oder mindestens eine Analyseeinheit auf und/oder die zentrale Empfangsvorrichtung weist mindestens eine andere Speichereinheit und/oder mindestens eine Auswertevorrichtung auf.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines erfindungsgemäßen Verfahrens zur Bestimmung eines Batteriezustands einer Batterie eines Reifensensors;
- Fig. 2: eine schematische Darstellung einer erfindungsgemäßen Vorrichtung zur Durchführung eines erfindungsgemäßen Verfahrens gemäß einer Ausführungsform.

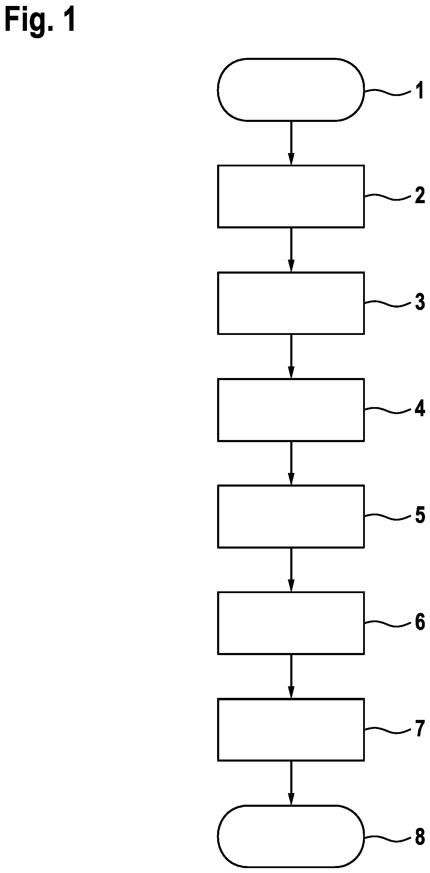

In der Figur 1 ist ein erfindungsgemäßes Verfahren zur Bestimmung eines Batteriezustands einer Batterie eines Reifensensors schematisch dargestellt. Mit Verfahrenseinleitungsschritt 1 wird das Verfahren eingeleitet. In Bereitstellungsschritt 2 wird ein Reifensensor in einem Reifeninnenraum eines Luftreifens bereitgestellt. Der Reifensensor kann auch außerhalb eines Luftreifens angebracht werden. Dabei weist der Reifensensor eine Batterie auf. In Aussendeschritt 3 werden Datentelegramme in regelmäßigen Zeitintervallen durch eine Sendeeinheit des Reifensensors ausgesendet. In dem fakultativen Empfangsvorrichtungsschritt 4 wird eine zentrale Empfangsvorrichtung bereitgestellt. In dem fakultativen Empfangsschritt 5 werden Datentelegramme durch die zentrale Empfangsvorrichtung empfangen. In Bestimmungsschritt 6 wird eine Anzahl der von dem Reifensensor ausgesendeten Datentelegramme bestimmt. Im Batteriezustandsbestimmungsschritt 7 wird in Abhängigkeit der Anzahl der ausgesandten Datentelegramme ein Batteriezustand der Batterie bestimmt. Die Anzahl der versendeten Datentelegramme kann insbesondere in einer Speichereinheit des Reifensensors gespeichert und dort hinterlegt werden. Der Batteriezustandsbestimmungsschritt 7 kann in einer Auswerteeinheit des Reifensensors vorgenommen werden. Dabei handelt es sich insbesondere um einen Vergleich der Anzahl der versendeten Datentelegramme mit einem Referenzwert. Der Referenzwert ist ebenfalls in der Speichereinheit des Reifensensors hinterlegt und entspricht einer maximal möglichen Anzahl versendbarer Datentelegramme. Mit Abschlussschritt 8 wird das Verfahren abgeschlossen.

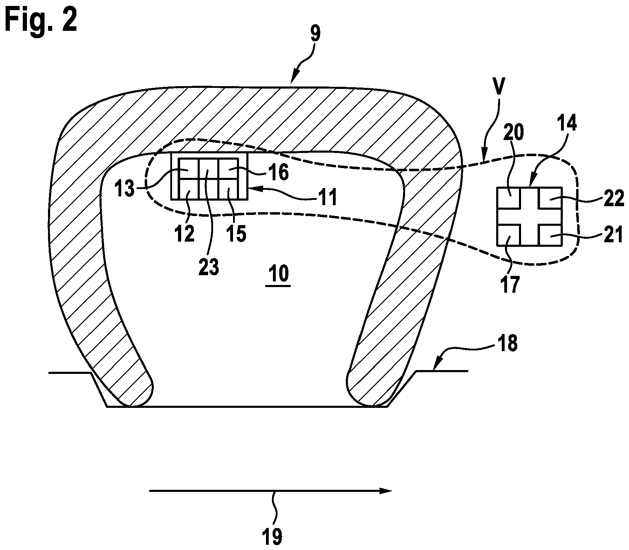

In der Figur 2 ist eine erfindungsgemäße Vorrichtung V zur Durchführung eines erfindungsgemäßen Verfahrens gemäß einer Ausführungsform schematisch dargestellt. Die Vorrichtung V enthält mehrere Komponenten. Ein Luftreifen 9 ist in Radialschnittansicht dargestellt. Die Radialschnittansicht bezieht sich auf eine Rotationsachse 19 des Luftreifens 9. Der Luftreifen 9 weist einen Reifeninnenraum 10 auf und ist auf einer Felge 18 angeordnet. In dem Reifeninnenraum 10 ist mindestens ein Reifensensor 11 angeordnet. Dabei weist der Reifensensor 11 eine Batterie 12 auf. Der Reifensensor 11 weist beispielsweise einzelne Sensorkomponenten 23, insbesondere Drucksensoren oder Temperatursensoren, auf.
Eine Sendeeinheit 13 des Reifensensors 11 sendet dabei in regelmäßigen Zeitintervallen Datentelegramme aus. Ferner ist eine zentrale Empfangsvorrichtung 14 außerhalb des Luftreifens 9 angeordnet. Die zentrale Empfangsvorrichtung 14 empfängt die Datentelegramme mittels einer Empfangseinheit 20. Die Datentelegramme enthalten beispielsweise Informationen über einen Druck oder eine Temperatur im Reifeninnenraum 10. Eine Information über die Anzahl der von dem Reifensensor 11 ausgesendeten Datentelegramme wird an die Speichereinheit 16 des Reifensensors 11 übertragen und dort gespeichert. Zusätzlich kann die zentrale Empfangsvorrichtung 14 mindestens eine andere Speichereinheit 17 aufweisen um ebenfalls die Anzahl der versendeten Datentelegramme zu speichern.
Die mindestens eine andere Speichereinheit 17 ist ebenfalls zur Speicherung einer Information über die Anzahl der ausgesandten Datentelegramme vorgesehen.

In einer Analyseeinheit oder Auswertevorrichtung 15 des Reifensensors 11 ist beispielsweise ein Referenzwert hinterlegt. Dieser Referenzwert entspricht der maximal möglichen Anzahl versendbarer Datentelegramme.

Mittels der Auswertevorrichtung 15 kann die Anzahl der bereits versendeten Datentelegramme mit dem Referenzwert verglichen werden. Das Ergebnis dieses Vergleichs kann beispielsweise als Quotient dieser beiden Werte in der Speichereinheit 16 hinterlegt oder nach Abfrage mittels der Sendeeinheit 13 an einen Empfänger außerhalb des Luftreifens 9 übertragen werden. Der Vergleich der beiden Werte kann zur Bestimmung beispielsweise einer Restkapazität oder einer Restlaufzeit der Batterie 12 verwendet werden.

Zusätzlich kann die zentrale Empfangsvorrichtung 14 mindestens eine andere Sendeeinheit 21 aufweisen um beispielsweise die Information über Anzahl der versendeten Datentelegramme an eine weitere, in der Figur 2 nicht dargestellte Empfangsvorrichtung oder an eine weitere, in der Figur 2 nicht dargestellte Auswertevorrichtung zu versenden.

Zusätzlich kann die zentrale Empfangsvorrichtung 14 mindestens eine andere Auswertevorrichtung 22 aufweisen um beispielsweise die Information über Anzahl der versendeten Datentelegramme zu verarbeiten.

Der Reifensensor 11, die Batterie 12, die Sendeeinheit 13, die zentrale Empfangsvorrichtung 14, die Auswertevorrichtung 15, die Speichereinheit 16, die andere Speichereinheit 17, die andere Sendeeinheit 21 und/oder die andere Auswertevorrichtung 22 stellen Komponenten der Vorrichtung V dar. Die Vorrichtung V enthält somit insbesondere räumlich voneinander getrennte Komponenten, wie den Reifensensor 11 und die zentrale Empfangsvorrichtung 14. Die Vorrichtung V kann auch als System bezeichnet werden, insbesondere als System zur Bestimmung eines Batteriezustands.

### Bezugszeichenliste

### (Teil der Beschreibung)

- 1: Verfahrenseinleitungsschritt
- 2: Bereitstellungsschritt
- 3: Aussendeschritt
- 4: Empfangsvorrichtungsschritt
- 5: Empfangsschritt
- 6: Bestimmungsschritt
- 7: Batteriezustandsbestimmungsschritt
- 8: Abschlussschritt
- 9: Luftreifen
- 10: Reifeninnenraum
- 11: Reifensensor
- 12: Batterie
- 13: Sendeeinheit
- 14: Zentrale Empfangsvorrichtung
- 15: Auswertevorrichtung
- 16: Speichereinheit
- 17: Andere Speichereinheit
- 18: Felge
- 19: Rotationsachse
- 20: Empfangseinheit
- 21: Weitere Sendeeinheit
- 22: Weitere Auswertevorrichtung
- 23: Sensorkomponenten
- V: Vorrichtung

## Patentansprüche

1. Verfahren zur Bestimmung eines Batteriezustands einer Batterie (12) eines Reifensensors (11), wobei der Reifensensor (11) zur Bestimmung einer Zustandsgröße eines Luftreifens (9) vorgesehen ist, ausweisend folgende Schritte:
a. Bereitstellen (2) eines Reifensensors (11), insbesondere für einen Reifeninnenraum (10) eines Luftreifens (9), wobei der Reifensensor (11) eine Batterie (12) ausweist;
b. Aussenden (3) von Datentelegrammen in regelmäßigen Zeitintervallen durch eine Sendeeinheit (13) des Reifensensors (11);
c. Bestimmung (6) einer Anzahl der von dem Reifensensor (11) ausgesendeten Datentelegramme;
d. Bestimmung (7) eines Batteriezustands der Batterie (12) in Abhängigkeit der Anzahl der ausgesandten Datentelegramme,
**dadurch gekennzeichnet, dass** der Batteriezustand in Abhängigkeit einer Temperatur der Batterie (12) bestimmt wird.

2. Verfahren nach dem vorhergehenden Anspruch, **dadurch gekennzeichnet, dass** die Anzahl der ausgesendeten Datentelegramme mit einem Referenzwert verglichen wird.

3. Verfahren nach dem vorhergehenden Anspruch, **dadurch gekennzeichnet, dass** ein Quotient aus dem Wert der Anzahl der Datentelegramme und dem Referenzwert gebildet wird.

4. Verfahren nach dem vorhergehenden Anspruch, **dadurch gekennzeichnet, dass** es sich bei dem Batteriezustand um eine Restkapazität oder eine Restlaufzeit der Batterie (12) handelt.

5. Verfahren nach einem der vorhergehenden Ansprüche, **dadurch gekennzeichnet, dass** eine Information über die Anzahl der von dem Reifensensor (11) ausgesandten Datentelegramme an eine Auswertevorrichtung (15) übertragen und insbesondere von der Auswertevorrichtung (15) verarbeitet wird.

6. Verfahren nach einem der vorhergehenden Ansprüche, **dadurch gekennzeichnet, dass** ein Wert der Anzahl der Datentelegramme mit einem Schwellenwert verglichen wird und in Abhängigkeit des Vergleichs ein Warnsignal erzeugt wird.

7. Verfahren nach dem vorhergehenden Anspruch, **dadurch gekennzeichnet, dass** ein Quotient des Werts der Anzahl der Datentelegramme mit dem Schwellenwert gebildet wird und insbesondere das Warnsignal oder ein Statussignal in Abhängigkeit des Quotienten erzeugt wird.

8. Verfahren nach einem der vorhergehenden Ansprüche, **dadurch gekennzeichnet, dass** der Batteriezustand in Abhängigkeit einer Laufleistung des Luftreifens (9) bestimmt wird.

9. Verfahren nach einem der vorhergehenden Ansprüche, **dadurch gekennzeichnet, dass** der Batteriezustand in Abhängigkeit eines Betriebsmodus des Reifensensors (11) bestimmt wird.

10. Verfahren nach dem vorhergehenden Anspruch, **dadurch gekennzeichnet, dass** für jeden Betriebsmodus des Reifensensors (11) eine separate, dem Betriebsmodus zugeordnete Anzahl der von dem Reifensensor (11) ausgesendeten Datentelegramme bestimmt wird.

11. Verfahren nach einem der vorhergehenden Ansprüche, **dadurch gekennzeichnet, dass** eine Information über die Anzahl der ausgesandten Datentelegramme in mindestens einer Speichereinheit (16) des Reifensensors (11) und/oder in mindestens einer anderen Speichereinheit (17) einer zentralen Empfangsvorrichtung (14) gespeichert wird, wobei es sich bei der Information insbesondere um einen Quotienten aus dem Wert der Anzahl der Datentelegramme und dem Referenzwert handelt.

12. Verfahren nach dem vorhergehenden Anspruch, **dadurch gekennzeichnet, dass** die Information über die Anzahl der ausgesandten Datentelegramme lediglich nach einer Abfrage von der mindestens einen Speichereinheit (16) des Reifensensors (11) und/oder von der mindestens einer anderen Speichereinheit (17) der zentralen Empfangsvorrichtung (14) mittels der Sendeeinheit (13) des Riefensensors (11) beziehungsweise mittels einer weiteren Sendeeinheit (21) der zentralen Empfangsvorrichtung (14) ausgesendet wird.

13. Verfahren nach einem der vorhergehenden Ansprüche, **dadurch gekennzeichnet, dass** eine Anzahl aller gesendeten Datentelegramme bestimmt wird und/oder eine Anzahl der Datentelegramme bestimmt wird, die während Fahrtzeiten des Luftreifens (9) gesendet werden, und eine separate Anzahl von Datentelegrammen bestimmt wird, die während Reifenstillstandszeiten des Luftreifens (13) gesendet werden, und/oder eine Anzahl von Datentelegrammen je nach einem Betriebsmodus des Reifensensors (11) bestimmt wird.

14. Vorrichtung (V) zur Durchführung eines Verfahrens nach einem der vorhergehenden Ansprüche, aufweisend einen Reifensensor (11) und/oder eine zentrale Empfangsvorrichtung (14) und/oder eine Sendeeinheit (13) und/oder eine Auswertevorrichtung (15).

15. Vorrichtung (V) nach dem vorhergehenden Anspruch 14, **dadurch gekennzeichnet, dass** der Reifensensor (11) mindestens eine Speichereinheit (16) aufweist und/oder die zentrale Empfangsvorrichtung (14) mindestens eine andere Speichereinheit (17) und/oder ein weitere Sendeeinheit (21) und/oder eine weitere Auswertevorrichtung (22) aufweist.

## Claims

1. Method for determining a condition of a battery (12) of a tyre sensor (11), the tyre sensor (11) being provided to determine a state variable of a pneumatic tyre (9), having the following steps:
a. providing (2) a tyre sensor (11), in particular for a tyre interior (10) of a pneumatic tyre (9), the tyre sensor (11) having a battery (12) ;
b. sending (3) data telegrams at regular time intervals by means of a sending unit (13) of the tyre sensor (11);
c. determining (6) a number of data telegrams sent by the tyre sensor (11);
d. determining (7) a condition of the battery (12) as a function of the number of data telegrams sent;
**characterized in that** the battery condition is determined as a function of a temperature of the battery (12).

2. Method according to the preceding claim, **characterized in that** the number of data telegrams sent is compared with a reference value.

3. Method according to the preceding claims, **characterized in that** a ratio of the value of the number of data telegrams to the reference value is formed.

4. Method according to the preceding claim, **characterized in that** the battery condition is a residual capacity or a remaining life of the battery (12).

5. Method according to one of the preceding claims, **characterized in that** information about the number of data telegrams sent by the tyre sensor (11) is transmitted to an evaluation device (15) and in particular is processed by the evaluation device (15) .

6. Method according to one of the preceding claims, **characterized in that** a value of the number of data telegrams is compared with a threshold value and a warning signal is generated as a function of the comparison.

7. Method according to the preceding claim, **characterized in that** a ratio of the value of the number of data telegrams to a threshold value is formed and in particular the warning signal or a status signal is generated as a function of the ratio.

8. Method according to one of the preceding claims, **characterized in that** the battery condition is determined as a function of a mileage of the pneumatic tyre (9).

9. Method according to one of the preceding claims, **characterized in that** the battery condition is determined as a function of an operating mode of the tyre sensor (11).

10. Method according to the preceding claim, **characterized in that** for each operating mode of the tyre sensor (11), a separate number of data telegrams sent by the tyre sensor (11) and assigned to the operating mode is determined.

11. Method according to one of the preceding claims, **characterized in that** information about the number of data telegrams sent is stored in at least one memory unit (16) of the tyre sensor (11) and/or in at least one other memory unit (17) of a central receiving device (14), the information in particular being a ratio of the value of the number of data telegrams to the reference value.

12. Method according to the preceding claim, **characterized in that** the information about the number of data telegrams sent is sent only following a request from the at least one memory unit (16) of the tyre sensor (11) and/or from the at least one other memory unit (17) of the central receiving device (14), by means of the sending unit (13) of the tyre sensor (11) and/or by means of a further sending unit (21) of the central receiving device (14).

13. Method according to one of the preceding claims, **characterized in that** that a number of all the data telegrams sent is determined and/or a number of the data telegrams which are sent during travel times of the pneumatic tyre (9) is sent, and a separate number of data telegrams which are sent during tyre stoppage times of the pneumatic tyre (13) is sent, and/or a number of data telegrams is determined depending on an operating mode of the tyre sensor (11).

14. Device (V) for carrying out a method according to one of the preceding claims, having a tyre sensor (11) and/or a central receiving device (14) and/or a sending unit (13) and/or an evaluation device (15) .

15. Device (V) according to the preceding Claim 14, **characterized in that** the tyre sensor (11) has at least one memory unit (16) and/or the central receiving device (14) has at least one other memory unit (17) and/or a further sending unit (21) and/or a further evaluation device (22).

## Revendications

1. Procédé de détermination d'un état de batterie d'une batterie (12) d'un capteur de pneumatique (11), dans lequel le capteur de pneumatique (11) est prévu pour déterminer une grandeur d'état d'un pneumatique (9), comprenant les étapes consistant à :
a. fournir (2) un capteur de pneumatique (11), en particulier pour un espace intérieur de pneumatique (10) d'un pneumatique (9), dans lequel le capteur de pneumatique (11) comporte une batterie (12) ;
b. transmettre (3) des télégrammes de données à intervalles réguliers par l'intermédiaire d'une unité de transmission (13) du capteur de pneumatique (11) ;
c. déterminer (6) un nombre des télégrammes de données transmis par le capteur de pneumatique (11) ;
d. déterminer (7) un état de batterie de la batterie (12) en fonction du nombre de télégrammes de données transmis, **caractérisé en ce que** l'état de batterie est déterminé en fonction d'une température de la batterie (12) .

2. Procédé selon la revendication précédente, **caractérisé en ce que** le nombre de télégrammes de données transmis est comparé à une valeur de référence.

3. Procédé selon la revendication précédente, **caractérisé en ce qu'**un quotient de la valeur du nombre de télégrammes de données à la valeur de référence est calculé.

4. Procédé selon la revendication précédente, **caractérisé en ce que** l'état de batterie est une capacité résiduelle ou une durée de fonctionnement résiduelle de la batterie (12).

5. Procédé selon l'une des revendications précédentes, **caractérisé en ce qu'**une information sur le nombre de télégrammes de données transmis par le capteur de pneumatique (11) est transmise à un dispositif d'évaluation (15) et est en particulier traitée par le dispositif d'évaluation (15).

6. Procédé selon l'une des revendications précédentes, **caractérisé en ce qu'**une valeur du nombre de télégrammes de données est comparée à une valeur de seuil et **en ce qu'**un signal d'avertissement est généré en fonction de la comparaison.

7. Procédé selon la revendication précédente, **caractérisé en ce qu'**un quotient de la valeur du nombre de télégrammes de données à la valeur de seuil est calculé et en particulier **en ce que** le signal d'avertissement ou un signal d'état est généré en fonction du quotient.

8. Procédé selon l'une des revendications précédentes, **caractérisé en ce que** l'état de batterie est déterminé en fonction d'un kilométrage du pneumatique (9) .

9. Procédé selon l'une des revendications précédentes, **caractérisé en ce que** l'état de batterie est déterminé en fonction d'un mode de fonctionnement du capteur de pneumatique (11).

10. Procédé selon la revendication précédente, **caractérisé en ce que**, pour chaque mode de fonctionnement du capteur de pneumatique (11), un nombre distinct des télégrammes de données transmis par le capteur de pneumatique (11) est déterminé, lequel nombre est associé au mode de fonctionnement.

11. Procédé selon l'une des revendications précédentes, **caractérisé en ce qu'**une information sur le nombre des télégrammes de données transmis est stockée dans au moins une unité de mémoire (16) du capteur de pneumatique (11) et/ou dans au moins une autre unité de mémoire (17) d'un dispositif de réception central (14), dans lequel l'information est en particulier un quotient de la valeur du nombre de télégrammes de données à la valeur de référence.

12. Procédé selon la revendication précédente, **caractérisé en ce que** l'information sur le nombre de télégrammes de données transmis n'est transmise qu'après une interrogation de ladite au moins une unité de mémoire (16) du capteur de pneumatique (11) et/ou de ladite au moins une autre unité de mémoire (17) du dispositif de réception central (14) au moyen de l'unité de transmission (13) du capteur de pneumatique (11) ou au moyen d'une autre unité de transmission (21) du dispositif de réception central (14).

13. Procédé selon l'une des revendications précédentes, **caractérisé en ce qu'**un nombre de tous les télégrammes de données transmis et/ou **en ce qu'**un nombre des télégrammes de données qui sont transmis pendant les temps de déplacement du pneumatique (9) est déterminé et **en ce qu'**un nombre distinct de télégrammes de données qui sont transmis pendant les temps d'immobilisation du pneumatique (13) est déterminé, et/ou **en ce qu'**un nombre de télégrammes de données est déterminé selon un mode de fonctionnement du capteur de pneumatique (11).

14. Dispositif (V) de mise en œuvre d'un procédé selon l'une des revendications précédentes, comprenant un capteur de pneumatique (11) et/ou un dispositif de réception central (14) et/ou une unité de transmission (13) et/ou un dispositif d'évaluation (15).

15. Dispositif (V) selon la revendication 14 précédente, **caractérisé en ce que** le capteur de pneumatique (11) comporte au moins une unité de stockage (16) et/ou **en ce que** le dispositif de réception central (14) comporte au moins une autre unité de stockage (17) et/ou une autre unité de transmission (21) et/ou un autre dispositif d'évaluation (22).
